# EUROPEAN PATENT APPLICATION

(11) **EP 1 245 371 A1**
(43) Date of publication of application: **02.10.2002**
(21) Application number: 02388027.1
(22) Date of filing: 26.03.2002
(51) Int. Cl.: B29C 69/00

(54) **Injection mould for the manufacture of a bucket**

(30) Priority: 28.03.2001 DK 200100515
(71) Applicant: Superfos A/S, 2950 Vedbaek (DK)
(72) Inventor: Thorso, Holger, 4300 Holbaek (DK)
(74) Representative: Sundien, Thomas

(57) **Abstract**

The invention relates to an injection mould (50) for the manufacture of a bucket (1) having a handle (25) with pins (30) in engagement with openings (15) in the bucket (1), comprising pin mould cavities (54') for forming the pins (30), two cores (68) which each are adapted to form one of said openings (15), and first linear guides (65) for the cores (68) arranged at the intended position of the openings (15). The mould is characterized in that the pin mould cavities (54') each have a ring-shaped area and comprise a movable core (107), and in that the injection mould (50) comprises second linear guides (105) for the cores (107) of the pin mould cavities (54'), whereby each core (107) can move the head (35) of the pin (30) into snap engagement with the engagement opening (15).

## Description

The present invention relates to an injection mould for the manufacture of a bucket having a bottom which defines a height axis of the bucket oriented upwards from the bottom, an annular wall, and a handle which is pivotally connected with the bucket at two areas of the bucket positioned diametrically opposite each other, said handle, at each end, comprising a pin directed toward the interior of the bucket and having an expanded head which is in snap engagement with an associated engagement opening in the bucket at least in said two areas.

More particularly, the injection mould is of the type that comprises a first mould part and a second mould part which are movable relative to each other in a direction, which corresponds to said height axis of the bucket, between closed and opened positions of the injection mould, and which define a first mould cavity adapted to form the bucket and a second mould cavity adapted to form the handle, said second mould cavity being present in its entirety outside the bucket mould cavity and comprising pin mould cavities for forming the pins, said first mould part having a female part for forming the external surface of the wall, said second mould part having a male part for forming the internal surface of the wall, two cores which each are adapted to form one of said engagement openings, linear guides arranged at the intended position of the engagement openings, thereby allowing said cores to be moved into the bucket mould cavity when the injection mould is in the closed position, and means for moving the pins of said handle into said snap engagement with associated engagement openings in the bucket.

An injection mould of this general type is known from European Patent Application No. 939 693.

The object of the invention is to provide such an injection mould, which is of a simpler structure than the known moulds, e.g. by avoiding the use of a pivotable arm as in EP 939 693, and which permits an even shorter cycle time in the manufacture of the mentioned articles.

This is achieved in that the pin mould cavities each have a ring-shaped area and comprise a movable core, and in that, at the intended position of the engagement openings, the injection mould comprises additional linear guides for the cores of the pin mould cavities, whereby each of these cores can move the head of the associated pin into snap engagement with the engagement opening when the injection mould is in the open position.

According to a preferred embodiment, the cores, which form the engagement openings, are configured to form the engagement openings in a respective flange which is provided externally on the wall of the bucket.

By constructing the mould as stated in the dependent claims it is possible to form the articles and to mount the handle particularly quickly, and also the mould can be constructed in a relatively simple manner.

The invention will be explained more fully below with reference to the embodiment shown in the drawing. In the drawing
Fig. 1 shows a plastics bucket manufactured by means of the injection mould according to the invention,
Fig. 2 shows a part of a handle manufactured by means of the injection mould according to the invention,
Fig. 3 shows a partial cross-section through the injection mould, seen in the area at the pin-shaped parts of the mould,
Figs. 4-9 show the injection mould of fig. 3, seen in various phases during the manufacture of a bucket with associated handle, and
Fig. 10 shows a partial cross-section through the injection mould, seen in the area at the parts of the mould that form the rest of the handle.

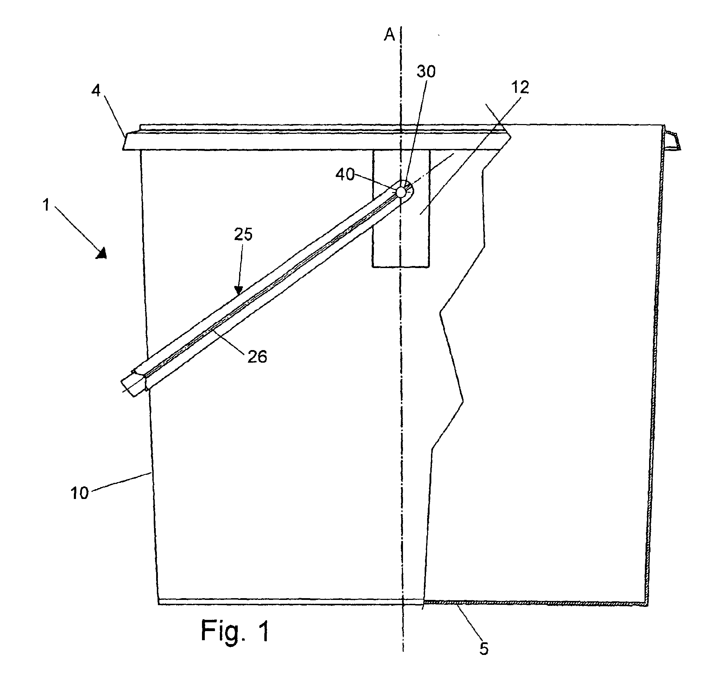

In fig. 1, the reference numeral 1 generally designates a round plastics bucket which has a bottom 5 and an annular wall 10 extending from the bottom 5 to a mouth of the bucket 1 arranged opposite the bottom 5. The bucket 1 has an axis of symmetry or height axis A which extends upwards from the bottom 5. At the mouth, the wall 10 externally has an annular, downwardly extending stiffening flange 4 which may optionally be used for securing a lid (not shown). Further, the bucket 1 has two areas positioned diametrically opposite each other and, spaced from the outer side of the wall 10, a downwardly extending flange 12 having an opening therethrough in which a plastics handle 25 is secured by snap engagement. The handle 25 has the general shape of a flat band, which has a T-shaped cross-section and which has a pin 30 with an expanded head at each end, said head being in snap engagement with the through opening in the flange 12. The described bucket 1 thereby does not differ considerably from known buckets, e.g. the bucket which is shown in fig. 1 in European Patent Application No. 939 693, which is hereby incorporated by way of reference.

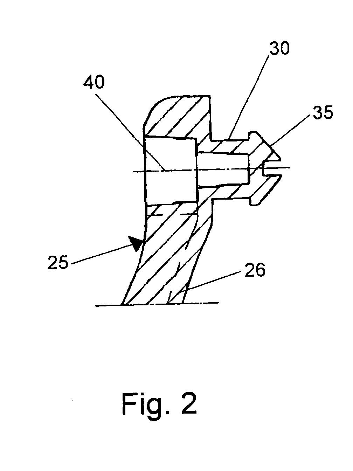

Fig. 2 is a cross-sectional view of the pin 30 and a part of one end of the handle 25. The figure shows that the pin 30, which is preferably rotationally symmetrical, has an expanded head 35, so that the handle may be caused to be in snap engagement with said through opening because of the resilience of the materials. It also appears how the pin 30 manufactured according to the shown embodiment of the invention has a preferably round depression 40, which ends in the interior of the pin 30 near the head 35, and which debouches opposite the head 35. The pin 30 shown is formed, as will be explained more fully, using a pin-like device that forms the depression 40 and about which the pin 30 with the head 35 is moulded.

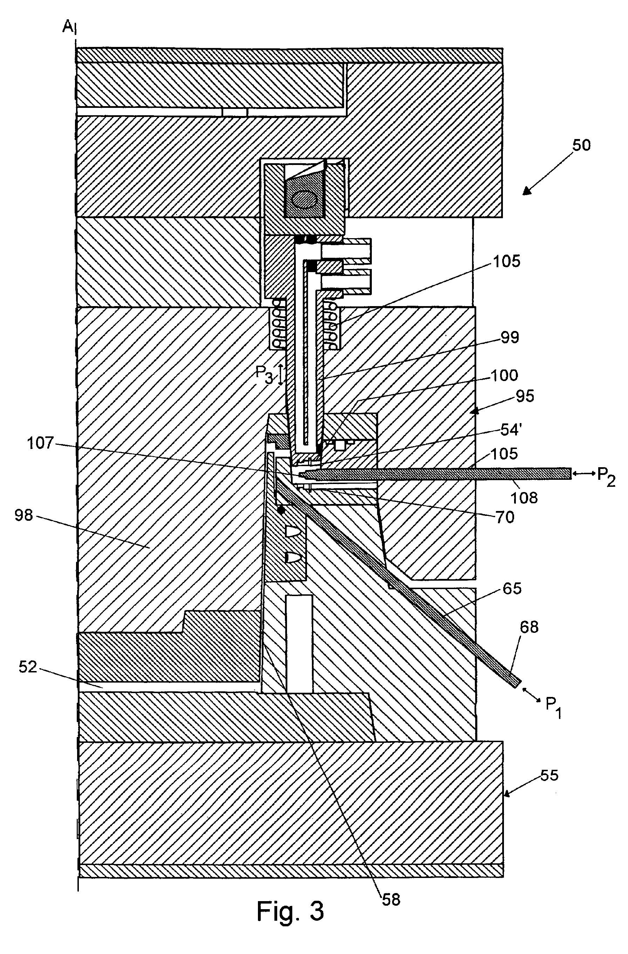

In fig. 3, the reference numeral 50 generally designates a section of an injection mould according to the invention which is suitable for the manufacture of a bucket 1 having a handle 25, as shown in figs. 1 and 2. As shown, the injection mould 50 comprises a first mould part 55 which is movable along the shown axis A corresponding to the height axis of the bucket 1. The injection mould 50 additionally comprises a second mould part 95, and, in a closed position of the mould, the two mould parts 55, 95 define a first mould cavity 52 for forming the wall 10, bottom 5 and flanges 4, 12 of the bucket 1 and a second mould cavity 54, 54' for forming the handle 25. For this purpose, the first mould part 55 has a female part 58 for forming the external surface of the wall 10 of the bucket, while the second mould part 95 has a male part 98 for forming the internal surface of the wall 10.

The two mould cavities 52, 54, 54' are preferably mutually insulated, in the sense that no plastics can circulate between the first mould cavity 52 and the second mould cavity 54, 54'. The mould cavities 52, 54, 54' may hereby be provided with plastics material from the same source, or a special type of plastics material may be conveyed to the one mould cavity, e.g. for forming a handle 25 having other strength or colour properties than the bucket 1 itself. The second mould cavity 54, 54' corresponding to the shape of the handle 25 is present in its entirety outside the first mould cavity 52, and has a part 54 which conventionally extends around approximately one half of the periphery of the bucket mould cavity 52 to end in two pin mould cavities 54', which have a ring-shaped area in the closed position of the mould. The configuration of the pin mould cavities, which will subsequently be specifically indicated by the reference numeral 54', will be described more fully.

More particularly, fig. 3 shows a cross-section through the injection mould 50 at the pin mould cavity 54'. As will appear, this area of the injection mould 50 comprises means for forming the pin 30 and for inserting the formed pin 30 into the engagement opening in the flange 12 of the bucket 1. Fig. 3 thus shows a number of the details which are essential to the invention. For clarifying the invention, the drawing shows the injection mould 50 in an intermediate position in which the first mould part 55 is about to be moved toward the second mould part 95 for a closed position of the mould 50. The figure moreover shows how the injection mould 50 of the invention comprises a channel-shaped first linear guide 65 for a movable core 68, which is adapted to form said engagement opening in the wall 10 of the bucket 1 during the injection moulding, and which is movable to and fro in the direction indicated by the arrow P₁. In the present text, the expression "linear guide" is taken to mean means for generating a rectilinear movement. In addition, the injection mould 50 comprises a second channel-shaped linear guide 105 for a pin 108 which is movable to and fro in the direction indicated by the arrow P₂. The head 107 of the pin 108 constitutes a core for the pin 30 and forms said depression 40 in the pin during the moulding. As will appear, the linear guide 105 may be provided in the second mould part 95, while the first linear guide 65 may be provided in the first mould part 55.

As shown in fig. 3, the injection mould 50 also comprises a movable part 99 which is movable in the direction indicated by the arrow P₃, and which may be biased by means of a spring 105 to the shown retracted position relative to the second mould part 95. The part 99 comprises a head 100 having a profile corresponding to a part of the outer contour of the pin 30 of the handle 25. Correspondingly, the first mould part 55 has an area 70 which corresponds to the rest of the outer contour of the pin 30 of the handle 25.

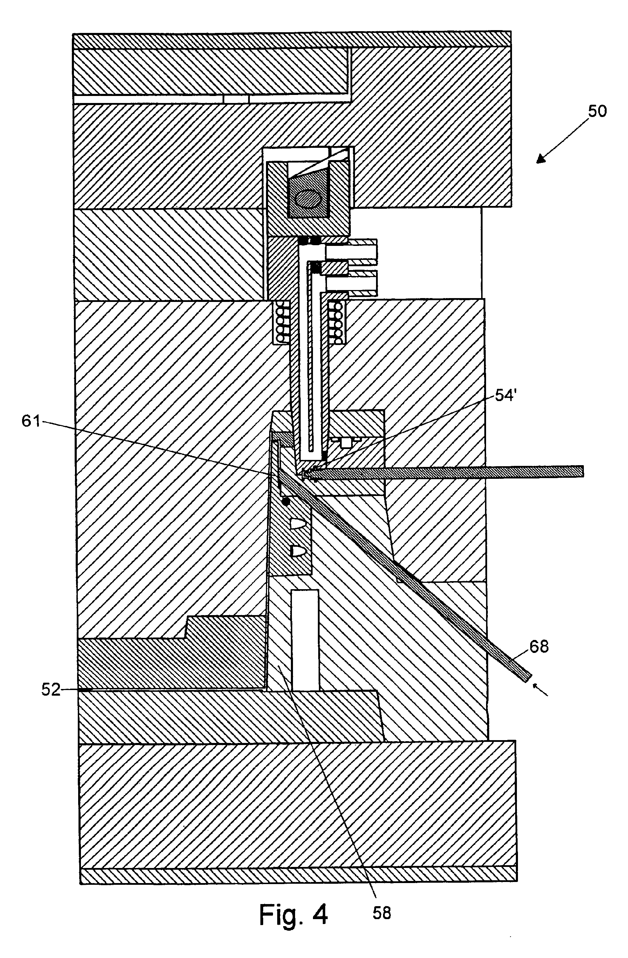

In fig. 4, the injection mould is shown in a closed position immediately before the introduction of liquid plastics material through injection channels (not shown). It will be seen that the mould parts 55, 95 have been moved completely against each other to define the bucket cavity 52 as well as the handle cavity 54. Further, the part 98 has been moved downwards so that the spring 105 has been tightened, whereby the ring-shaped area of the pin mould cavity 54' appears between the surface of the pin 108 and the surface of the head 100 and the area 70. It will be appreciated that, in the shown state of the injection mould 50, the pin mould cavity 54' communicates with the cavity 54 that forms the rest of the handle 25. In addition, the core 68 has been moved in the direction of the shown arrow so that the end of the core engages part of the surface of a mould part 61 which forms the inner side of the flange 12 of the bucket. In the closed position of the injection mould, an imaginary extension of the pin 108 and the core 68, respectively, intersects each other at the intended position of the engagement opening in the bucket 1.

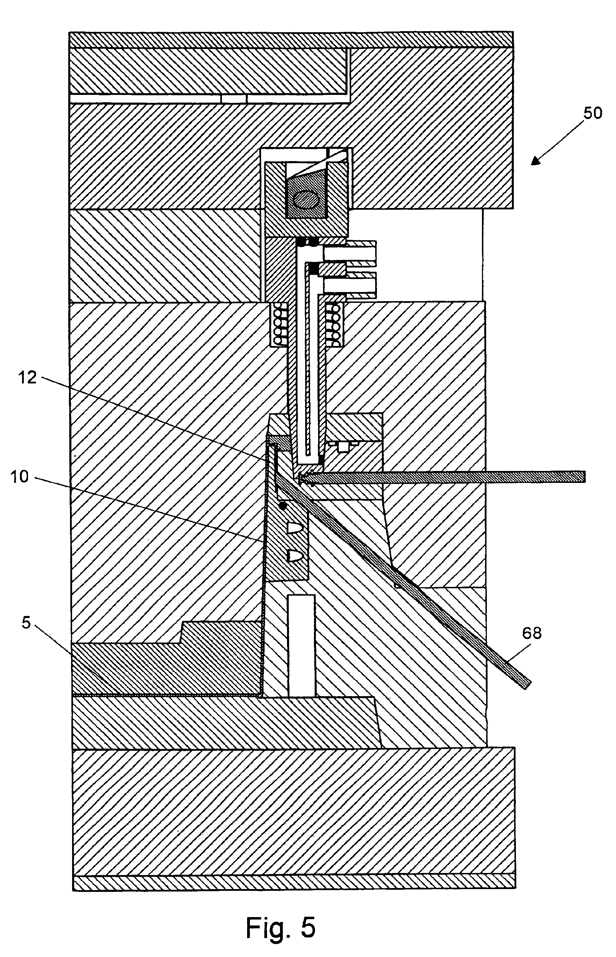

Then plastics material is fed to the cavities 52, 54, 54' for forming the bucket and the handle 25, as outlined in fig. 5, from which it will be appreciated that the plastics material flows around the end of the core 68 so as to establish an annular opening in the flange 12 in the finished bucket 1.

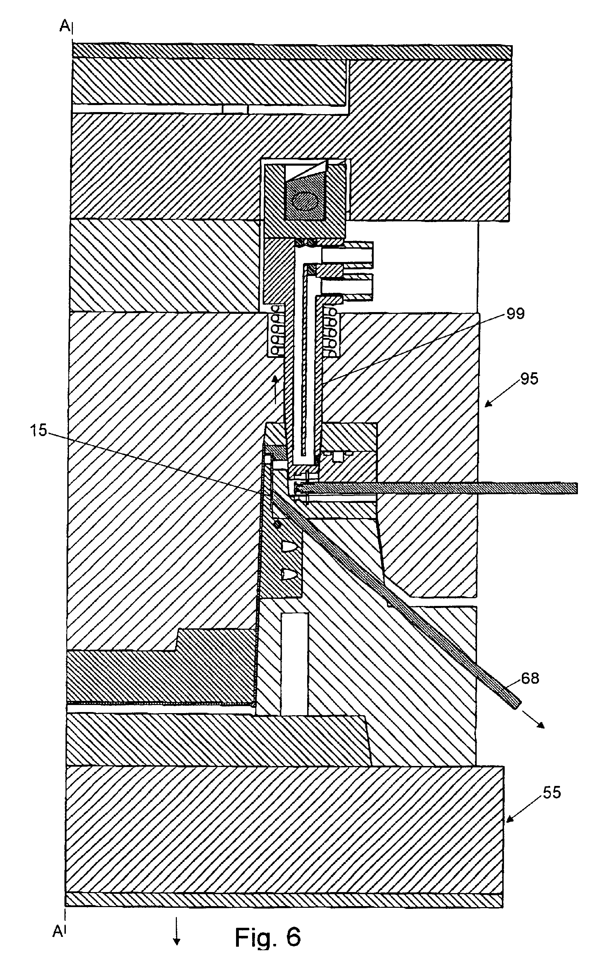

In a next step, the core 68 is then moved out from the mould cavity 52 in the direction shown in fig. 6, thereby allowing the mould part 55 to be moved away from the second mould part 95. The part 99 is moved upwards simultaneously with this movement.

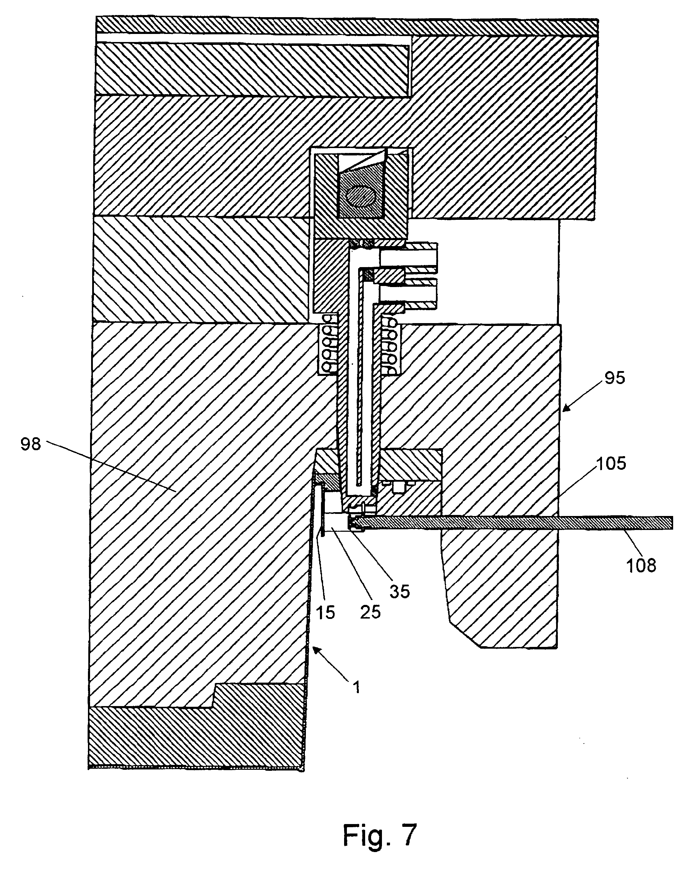

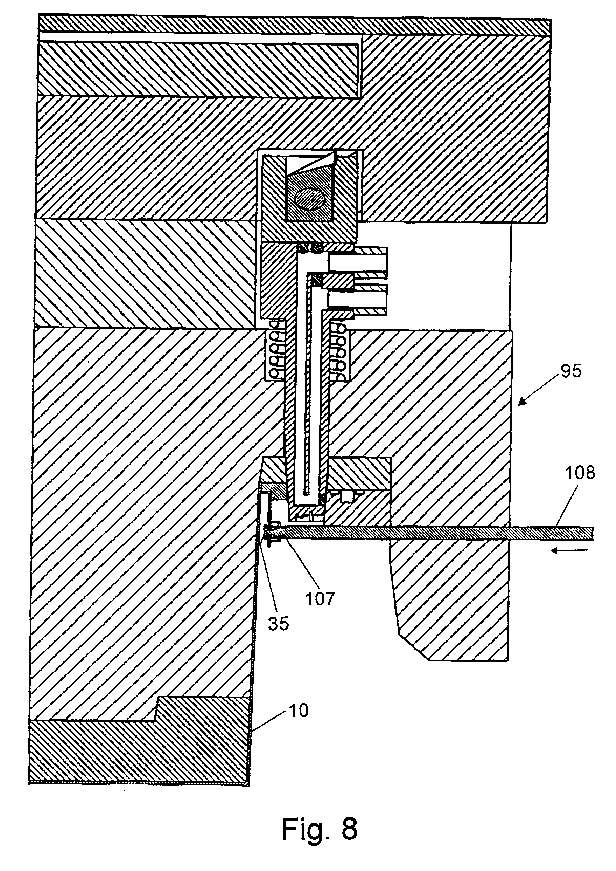

Fig. 7 shows the second mould part 95 after complete opening of the injection mould 50. At this time the bucket 1 is present on the male part 98 and the handle 25 hangs around the bucket 1, only supported by the pins 108 which are surrounded by the pins 35. Because the part 99 has been upwards as shown in fig. 6, the pin 108, which is mounted in the linear guide 105, may be moved straight inwards toward the small engagement opening 15 in the flange 12 of the bucket 1. By applying a sufficient pressure force, the pin 108 may cause the expanded head 35 of the pin 30 to be pressed through the engagement opening 15 with elastic deformation of the plastics material, so that the head is secured against being pulled out on the side of the flange 12 facing toward the wall 10 of the bucket 1. The last-mentioned process step is illustrated in fig. 8.

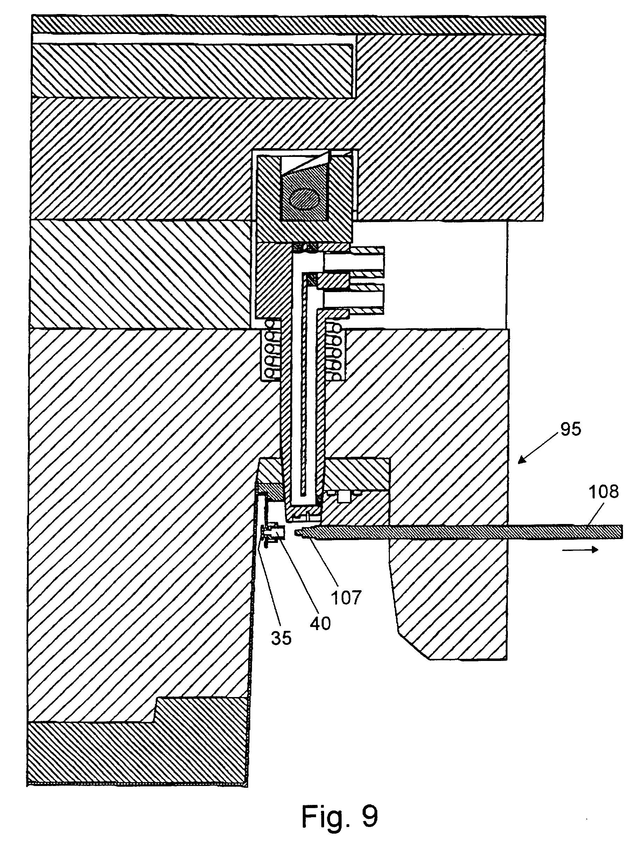

The pin 108 is then retracted as shown in fig. 9, following which the article is ejected from the mould. Then the mould 50 is again moved to the starting position shown in fig. 4 for the manufacture of the next article.

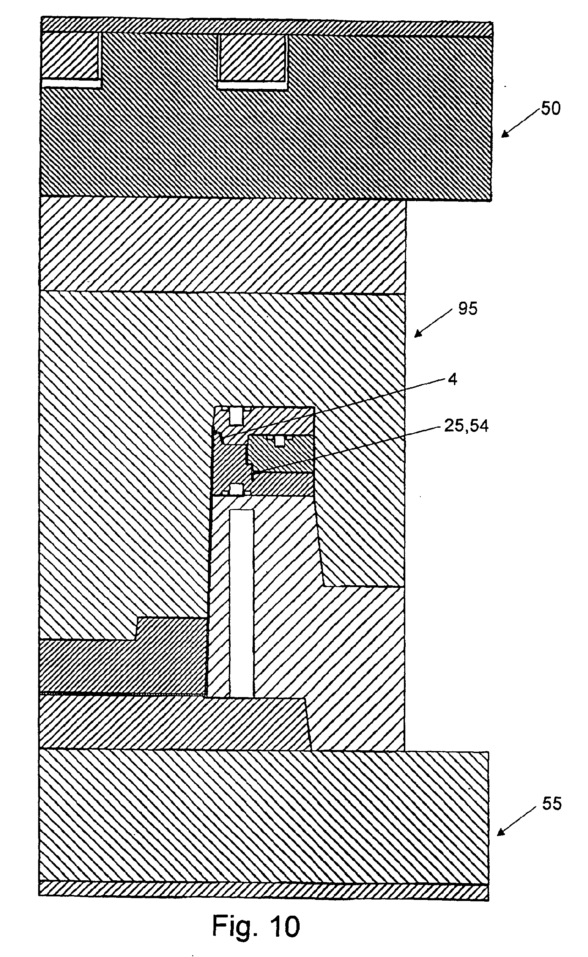

For purposes of orientation, fig. 10 shows another cross-section through the injection mould 50, more particularly through the area for forming the band-like portion of the handle 25, at a time during the moulding process corresponding to the time shown in fig. 5. This area may expediently comprise ejector pins for releasing the band-like portion from the part of the handle mould cavity 54 which is present in the second mould part 54.

Although, in the embodiment, the pin 30 is manufactured with a depression 40 which is closed at the head 35 of the pin, nothing prevents the pin mould cavity 54' from being formed as a completely ring-shaped chamber where the end face of the head 107 can engage the mould parts 55, 95.

## Claims

1. An injection mould (50) for the manufacture of a bucket (1) having a bottom (5) which defines a height axis (A) of the bucket (1) oriented upwards from said bottom, an annular wall (10), and a handle (25) which is pivotally connected with the bucket (1) at two areas of the bucket positioned diametrically opposite each other, said handle (25), at each end, having a pin (30) directed toward the interior of the bucket and comprising an expanded head (35) which is in snap engagement with an associated engagement opening (15) in the bucket (1) at least in said two areas, said injection mould (50) comprising:
a first mould part (55) and a second mould part (95) which are movable relative to each other in a direction, which corresponds to said height axis (A) of the bucket (1), between closed and opened positions of the injection mould (50), and which define a first mould cavity (52) adapted to form the bucket (1) and a second mould cavity (54, 54') adapted to form the handle (25), said second mould cavity being present in its entirety outside the bucket mould cavity (52) and comprising pin mould cavities (54') for forming the pins (30), said first mould part (55) having a female part (58) for forming the external surface of the wall (10), said second mould part (95) having a male part (98) for forming the internal surface of the wall (10),
two cores (68) which each are adapted to form one of said engagement openings (15),
first linear guides (65) arranged at the intended position of the engagement openings (15), thereby allowing the cores (68) to be moved into the bucket mould cavity (52) when the injection mould (50) is in the closed position, and
means for moving the pins (30) of said handle (25) into said snap engagement with associated engagement openings (15) in the bucket (1),
**characterized in**
**that** the pin mould cavities (54') each have a ring-shaped area and comprise a movable core (107), and
**that**, at the intended position of the engagement openings (15), the injection mould (50) comprises second linear guides (105) for the cores (107) of the pin mould cavities (54'), whereby each core (107) can move the head (35) of the pin (30) into snap engagement with the engagement opening (15) when the injection mould (50) is in the open position.

2. An injection mould according to the preceding claim,
**characterized in that** the engagement openings (15) are formed in a flange (12) externally on the wall (10) of the bucket (1).

3. An injection mould according to any one of the preceding claims, **chara cterized in that** the first linear guides (65) are formed in the first mould part (55), and that the second linear guides (105) are formed in the second mould part (95).

4. An injection mould according to any one of the preceding claims, **chara cterized in that** the first linear guides (65) and the second linear guides (105) extend in a plane which is in parallel with the height axis (A) of the bucket (1).

5. An injection mould according to any one of the preceding claims, **chara cterized in that** the core (107) is adapted to form a closed depression (40) in the pin (30), said depression (40) extending forwardly to the head (35) of the pin (30).

6. An injection mould according to any one of the preceding claims, **chara cterized in that** the first (55) or second (95) mould part comprises a member (99) movable relative to the mould part and having a head (100) adapted to form part of the external surface of the pins (30).

7. An injection mould according to any one of the preceding claims, **chara cterized in that** just the cores (107) carry the handle (25) when the mould parts (55, 95) have been moved to the open position of the injection mould (50) and before the pins (30) have been moved into engagement with the engagement openings (15).
